# EUROPÄISCHE PATENTSCHRIFT

(11) **EP 0 453 882 B1**
(45) Veröffentlichungstag und Bekanntmachung des Hinweises auf die Patenterteilung: **08.03.1995**
(21) Anmeldenummer: 91105744.6
(22) Anmeldetag: 11.04.1991
(51) Int. Cl.: C07F 7/08, C08G 77/04, C08G 77/06, C04B 35/00, C08J 5/00

(54) **Oligosiloxane sowie unter deren Verwendung erhältliche verstärkte thermoplastische und keramische Massen**
Oligosiloxanes as well as reinforced thermoplastic compositions and ceramic compositions obtained therewith
Oligosiloxanes, masses thermoplastiques renforcées et masses céramiques ainsi obtenues

(30) Priorität: 21.04.1990 DE 4012765
(43) Veröffentlichungstag der Anmeldung: 30.10.1991
(73) Patentinhaber: BASF Aktiengesellschaft, 67063 Ludwigshafen (DE)
(72) Erfinder: Haas, Karl-Heinz, Dr., W-6710 Frankenthal (DE)

(56) Entgegenhaltungen:
- EP-A- 0 251 109
- JOURNAL OF POLYMER SCIENCE /PART A, Band 25, Nr. 6, Juni 1987, Seiten 1671-1679, New York, US; Y. ABE et al.: "Preparation of polysiloxanes from silicicacid. IX. Partially silylated silicic acid and its spinnability"

## Beschreibung

Die vorliegende Erfindung betrifft neue Oligosiloxane der allgemeinen Formel I 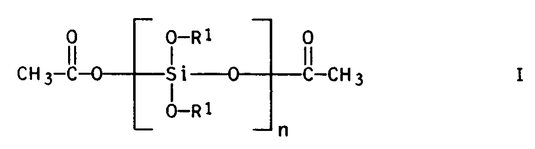
in der
- R¹: eine C₁-C₄-Alkylgruppe bedeutet und
- n: für einen Wert von 2 bis 50, vorzugsweise 2 bis 10, steht.

Außerdem betrifft die Erfindung ein Verfahren zur Herstellung dieser Oligosiloxane, thermoplastische Massen, die diese Verbindungen enthalten, neue Polysiloxane, ein Verfahren zur Herstellung dieser Verbindungen und thermoplastische Massen, die diese Polysiloxane enthalten.

Des weiteren betrifft die Erfindung Verbundwerkstoffe aus thermoplastischen Massen und Siliciumdioxid-Verstärkungsfasern, diese Verbundwerkstoffe mit Haftvermittlern als weitere Komponente und solche, die weiteres feinteiliges keramisches Material enthalten.

Außerdem betrifft die Erfindung Formkörper aus keramischem Material und Siliciumdioxid-Verstärkungsfasern.

Verbundwerkstoffe aus Thermoplasten und Fasern aus anorganischem Material wie beispielsweise Aluminiumoxid und Siliciumdioxid sind allgemein bekannt.

Die Fasern können dabei aus den Alkoxyverbindungen der Metalle durch Hydrolyse in situ in Lösungen der Thermoplasten hergestellt werden (DE-A 35 33 574 und 36 21 206).

Die an sich gute Verstärkungswirkung dieser Materialien läßt jedoch noch zu wünschen übrig, und zwar vermutlich deswegen, weil die Kettenmoleküle relativ kurz sind.

Der vorliegenden Erfindung lag daher die Aufgabe zugrunde, neue Materialien bereitzustellen, die insbesondere für die Herstellung von faserverstärkten Massen verwendet werden können.

Demgemäß wurden die eingangs definierten Oligosiloxane I und daraus erhältliche Polysiloxane III, Verfahren zu ihrer Herstellung und diese Verbindungen enthaltende thermoplastische Massen gefunden.

Weiterhin wurden Verbundwerkstoffe aus thermoplastischen Massen und Siliciumdioxid-Verstärkungsfasern, diese Verbundwerkstoffe mit Haftvermittlern als weiterer Komponente und solche mit zusätzlichem feinteiligem keramischen Material sowie daraus erhältliche Keramikformkörper gefunden.

In den erfindungsgemäßen Oligosiloxanen I bedeutet R¹ eine C₁-C₄-Alkylgruppe wie Methyl, n-Propyl, iso-Propyl, n-Butyl, iso-Butyl und tert.-Butyl und ganz besonders Ethyl.

Der Polymerisationsgrad n steht für einen Wert von 2 bis 10, vorzugsweise von 2 bis 6.

Die Oligosiloxane I werden zweckmäßigerweise durch Umsetzung von entsprechenden oligomeren Kieselsäureestern der allgemeinen Formel II 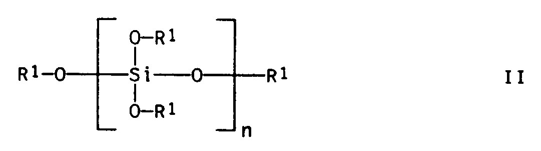
mit Essigsäureanhydrid in an sich bekannter Weise hergestellt (siehe z.B. J. Org. Chem., 5, 443-448 (1940)).

Die als Ausgangsverbindungen dienenden Kieselsäureester II sind bekannt oder nach bekannten Methoden erhältlich (siehe z.B. Colloid + Polymer Sci. 253, 658-664 (1975)).

Das Molverhältnis von Essigsäureanhydrid zum Kieselsäureester II beträgt für den vollständigen Austausch der Endgruppen mindestens 2:1; bevorzugt wird jedoch ein Molverhältnis von 5:1, besonders von 2,5:1 bis 3:1.

Verfahrenstechnisch geht man in der Regel so vor, daß man die Komponente II und Essigsäureanhydrid auf die Reaktionstemperatur erhitzt und nach Ablauf der Reaktion Nebenprodukte und überschüssiges Essigsäureanhydrid abdestilliert.

Im allgemeinen führt man die Reaktion zwischen 50 und 140, vorzugsweise bei 120 bis 140°C durch; die entsprechenden Reaktionszeiten betragen normalerweise 0,5 bis 8, meistens 0,5 bis 5 Stunden.

Zur Beschleunigung der Umsetzung und zur Erniedrigung der erforderlichen Reaktionstemperatur empfiehlt es sich, das erfindungsgemäße Verfahren unter Verwendung eines Katalysators durchzuführen.

Als Katalysatoren eignen sich Mineralsäuren wie Schwefelsäure, Salzsäure, Phosphorsäure und Salpetersäure. Bevorzugt verwendet man Titan- oder Aluminiumalkoxide und Siliciumtetrachlorid. Ganz besonders gute Ergebnisse erzielt man mit Perchlorsäure.

Im allgemeinen werden die Katalysatoren in Mengen von 0,0005 bis 0,1 mol-%, vorzugsweise von 0,001 bis 0,01 mol-% der Oligosiloxane I eingesetzt.

Unter Mitverwendung von Katalysatoren kann man die Reaktion in der Regel bei 20 bis 100, bevorzugt bei 60 bis 80°C durchführen, wobei sich auch die Reaktionszeiten auf etwa 0,25 bis 2 Stunden erniedrigen. Unter diesen Reaktionsbedingungen werden die seitenständigen (-O-R¹)-Gruppen praktisch nicht angegriffen.

Die so erhältlichen Oligosiloxane I können durch thermische Polykondensation in die erfindungsgemäßen linearen Polysiloxane III überführt werden.

Eine im Hinblick auf die gewünschten Verfahrensprodukte aus thermoplastischen Massen und Siliciumdioxid-Verstärkungsfasern sehr vorteilhafte Ausführungsform der thermischen Polykondensation besteht im Erhitzen einer Mischung des Thermoplasten und der Oligosiloxane I in einem organischen Lösungsmittel.

Hierbei betragen die Reaktionstemperaturen vorzugsweise 200 bis 350, insbesondere 280 bis 320°C und die Reaktionszeiten normalerweise 1 bis 30, meistens 3 bis 10 Minuten.

Als organische Lösungsmittel eignen sich Monomethoxyethanol, Monoethoxymethanol, Monomethoxyethanol, Monoethoxymethanol, Dimethoxyethanol, Dimethylsulfoxid, N-Cyclohexylpyrrolidon, Benzylalkohol und N-Methylpyrrolidon.

Bei der Umsetzung der Oligosiloxane I zu den Polysiloxanen III empfiehlt es sich, einen Radikalbildner als Katalysator mitzuverwenden. Als bevorzugte Katalysatoren sind Dibenzoylperoxid, tert.-Butylperoxobenzoat, tert.-Butylperoxoacetat, Dicumylperoxid, Cumylhydroperoxid, Di-tert.-butylperoxid, tert.-Butylhydroperoxid und vor allem Cumolhydroperoxid, Aluminiumalkoxide und Zinndibutyldiacetat zu nennen, die im allgemeinen in Mengen von 0,0001 bis 1 mol-%, vorzugsweise von 0,001 bis 0,1 mol-% der Oligosiloxane I eingesetzt werden.

Bei Mitverwendung eines Katalysators führt man die Reaktion üblicherweise bei 200 bis 300, bevorzugt bei 250 bis 270°C durch, wobei die Reaktionszeiten in der Regel 1 bis 10, meistens 3 bis 8 Minuten betragen.

Die erfindungsgemäßen Verbundwerkstoffe aus thermoplastischen Massen und Siliciumdioxid-Verstärkungsfasern werden durch saure Hydrolyse und basische Weiterkondensation von in einer organischen Lösung der thermoplastischen Masse dispergierten Polysiloxanen III sowie anschließende Entfernung der flüchtigen Bestandteile hergestellt.

Als thermoplastische Massen eignen sich Polyamide, z.B. Polyamid-6 und Polyamid-6,6, Polyphenylensulfone, Polyphenylenethersulfone, aromatische Polyetherimide, Polyamidimide, aromatische Polyetherketone und aromatische Polyester.

Zweckmäßigerweise katalysiert man die Hydrolysereaktion durch Mineralsäuren wie Schwefelsäure, Salzsäure, Phosphorsäure oder Salpetersäure, die in Mengen von 0,001 bis 1 mol-%, vorzugsweise von 0,05 bis 0,5 mol-% der Oligosiloxane I eingesetzt werden.

Die Weiterkondensation wird in der Regel durch Basen wie Ammoniak, C₁-C₃-Alkylamine, Ammoniumfluorid sowie Aluminium- oder Titanalkoxide katalysiert. Diese werden in Mengen von 0,01 bis 1 mol-%, vorzugsweise von 0,5 bis 1 mol-% der Oligosiloxane I eingesetzt.

Im allgemeinen führt man die Hydrolyse- und Kondensationsreaktion bei 200 bis 350, vorzugsweise bei 280 bis 350°C durch, die entsprechenden Reaktionszeiten betragen 0,5 bis 10, meistens 1 bis 3 Minuten.

Zur besseren Kraftübertragung zwischen der Faser und der thermoplastischen Masse kann man Haftvermittler zusetzen.

Bevorzugte Haftvermittler für unpolare Thermoplasten sind Methyltriethoxysilan, Ethyltriethoxysilan, Propyltriethoxysilan und Phenyltriethoxysilan.

Als bevorzugte Haftvermittler für polare Thermoplasten mit sauren funktionellen Gruppen sind γ-Amino-propyltrimethoxysilan, γ-Amino-propyltriethoxysilan und N,N-Dimethylamino-propyltriethoxysilan zu nennen.

Für polare Thermoplasten mit basischen funktionellen Gruppen kommen vorzugsweise γ-Cyanopropyltriethoxysilan oder para-Toluolsulfonyltrimethoxysilan als Haftvermittler in Betracht, da deren Cyano- bzw. Sulfonylgruppen während der Hydrolyse zu Carboxyl- bzw. Sulfonsäuregruppen reagieren.

Die Haftvermittler werden in der Regel in Mengen von 1 bis 15 mol-%, insbesondere von 5 bis 10 mol-% der Oligosiloxane I eingesetzt.

Aufgrund der begrenzten thermischen Stabilität dieser Verbindungen führt man bei ihrer Verwendung die Hydrolyse- und Kondensationsreaktion bevorzugt bei 220 bis 280°C durch.

Verfahrenstechnisch geht man im allgemeinen so vor, daß man die Oligosiloxane I und das organische Lösungsmittel in die auf die Reaktionstemperatur erhitzte thermoplastische Masse einträgt, danach zunächst Wasser und den sauren Katalysator und sodann den basischen Katalysator zusetzt und schließlich nach der Zugabe des Haftvermittlers die flüchtigen Bestandteile destillativ entfernt.

Um die haftvermittelnden funktionellen Gruppen in das Siliciumdioxid-Netzwerk einzubauen, bringt man bevorzugt bereits die Kieselsäureester II mit den Haftvermittlern zur Reaktion.

Die so erhältlichen faserverstärkten thermoplastischen Massen zeichnen sich durch hervorragende mechanische Eigenschaften aus und eignen sich daher als Verbundwerkstoffe. Eine besondere Verwendung der faserverstärkten Thermoplasten besteht in der Herstellung von faserverstärkten keramischen Formkörpern.

Das Verfahren wird in der Regel so durchgeführt, daß man eine Dispersion eines feinteiligen keramischen Pulvers in einem organischen Lösungsmittel in eine erhitzte Mischung aus einem Thermoplasten, Siliciumdioxid-Verstärkungsfasern und Haftvermittler einträgt und anschließend das Lösungsmittel entfernt.

Als feinteiliges keramisches Pulver kommt gebranntes oder vorzugsweise ungebranntes Keramikpulver in Betracht, das in an sich bekannter Weise nach dem Sol-Gel-Verfahren (D. Ulrich, Journ. of Non.-Cryst. Solids, 100, 174 (1988)) erhältlich ist.

Bevorzugtes keramisches Material ist die Oxidkeramik aus Aluminiumoxid, Siliciumdioxid, Berylliumoxid, Magnesiumoxid, Zirkoniumoxid und Titandioxid. Der Feststoffgehalt der Keramikdispersion beträgt vorzugsweise 40 bis 65 Vol.-%. Im allgemeinen wird das keramische Material in Mengen von 100 bis 200 Gew.-%, bezogen auf die Oligosiloxane I, in den Thermoplasten eingetragen.

Bevorzugte organische Lösungsmittel sind:
- aliphatische Polyether wie Diethylenglykolmonobutylether, Ethylenglykolmonobutylether, Diethylenglykolmonoethylether und Diethylenglykoldiethylether;
- Amide wie N,N-Dimethylacetamid, N-Methylpyrrolidon und N-Cyclohexylpyrrolidon und
- Triphenylphosphit, Triphenylphosphat sowie Trikresylphosphat.

Das Vermischen der Keramikdispersion mit der faserverstärkten thermoplastischen Masse nimmt man bei 150 bis 300, vorzugsweise bei 150 bis 250°C vor.

Die Weiterverarbeitung des Reaktionsgemisches auf faserverstärkte keramische Formkörper erfolgt in an sich bekannter Weise, und zwar durch Granulierung der Massen, Entfernung überschüssiger Lösungsmittel durch Trocknen, Herstellung eines Formkörpers aus dem Granulat, z.B. durch Spritzgußverarbeitung, sowie anschließendem Ausbrennen der thermoplastischen Masse und Sintern des Formkörpers.

Das Ausbrennen des Thermoplasten nimmt man üblicherweise bei 400 bis 700°C, insbesondere bei 500 bis 600°C vor.

Aufgrund der Temperaturbehandlung ist der Einsatz thermoplastischer Massen auf solche Polymere beschränkt, deren Zersetzung über eine Depolymerisation und damit ohne Kohlenstoffrückstände erfolgt.

Bevorzugte Polymere sind Polyoxymethylen und Polyethylen.

Alle Operationen können bei Normaldruck ausgeführt werden, vorzugsweise arbeitet man im Bereich von 2 bis 100 bar.

Die Oligosiloxane I und Polysiloxane III gemäß der Erfindung dienen bevorzugt der Herstellung der erfindungsgemäßen Massen aus Thermoplasten und Siliciumdioxid-Verstärkungsfasern sowie dieser mit zusätzlichen Haftvermittlern, die hauptsächlich als Verbundwerkstoffe in der Form von Formkörpern, Hohlkörpern, Profilen, Folien, Fasern oder Überzügen Verwendung finden und zur Herstellung von faserverstärkten keramischen Materialien sowie daraus erhältlichen Keramikformkörpern genutzt werden können. Derartige Formkörper zeichnen sich durch hohe Festigkeit und Zähigkeit, geringes Gewicht und einfache Verarbeitbarkeit aus und werden daher als Konstruktionswerkstoffe im Maschinen- und Apparatebau sowie als Substratmaterialien für integrierte Schaltungen verwendet.

Die aus den erfindungsgemäßen Oligosiloxanen I und Polysiloxanen III erhältlichen faserverstärkten thermoplastischen und keramischen Massen zeichnen sich durch hervorragende mechanische Eigenschaften aus.

### Beispiel 1

### Herstellung von 1,4-Diacetoxytetra(diethoxy)siloxan

Eine Mischung aus 611 g (1 mol) 1,4-Diethoxytetra(diethoxy)siloxan, 0,1 g (1 mmol) Perchlorsäure und 204,2 g (2 mol) Essigsäureanhydrid wurde eine Stunde lang auf 70°C erhitzt, wonach die flüchtigen Bestandteile des Reaktionsgemisches abdestilliert wurden.

Der Rückstand entsprach gemäß NMR-Analyse der Titelverbindung, die in einer praktisch quantitativen Ausbeute erhalten wurde. Der SiOAc-Gehalt des Produktes betrug nach NMR-spektroskopischen Bestimmungen 20 mol-%, bezogen auf die SiOEt-Gruppen.

### Beispiel 2

### Herstellung von Ethoxypolysiloxan

Eine Mischung aus 639 g (1 mol) 1,4-Diacetoxytetra(diethoxy)siloxan und 2 l N-Cyclohexylpyrrolidon wurde in Gegenwart von 3,5 g (0,01 mol) Zinndibutyldiacetat für die Dauer von 10 Minuten auf 270°C erhitzt.

Die anschließende destillative Entfernung der flüchtigen Bestandteile und Trocknen lieferte das Produkt III in einer Ausbeute von 87 Gew.-%.

### Beispiel 3

### Herstellung von faserverstärktem Polyphenylensulfon

6,39 kg (10 mol) 1,4-Diacetoxytetra(diethoxy)siloxan wurde in eine auf 300°C erhitzte Mischung aus 10 kg (0,3 mol) Polyphenylensulfon und 1 l N-Methylpyrrolidon in einen Doppelwellenextruder eingetragen. Nach Zugabe von 3,5 g Zinndibutyldiacetat und destillativer Entfernung der flüchtigen Bestandteile sowie Trocknen wurde das faserverstärkte Polyphenylensulfon mit einem Fasergehalt von 31 Gew.-% erhalten.

### Beispiel 4

### Herstellung von faserverstärktem Polyphenylensulfon mit höher vernetzten Kettenmolekülen

Eine in einem Doppelwellenextruder befindliche Mischung aus 14,5 kg faserverstärktem Polyphenylensulfon gemäß Beispiel 3 und 1,5 l N-Methylpyrrolidon wurde in einer auf 300°C temperierten Heizzone zunächst mit 2 l Wasser, dann mit 8 ml wäßriger Salzsäure (32 %) in 30 ml N-Methylpyrrolidon und nach einer Verweilzeit von 1 Minute mit 20 ml wäßrigem Ammoniak (25 %) in 70 ml N-Methylpyrrolidon versetzt. Anschließend wurden die flüchtigen Bestandteile abdestilliert. Trocknen des Rückstandes lieferte das faserverstärkte Polyphenylensulfon mit einem SiO₂-Fasergehalt von 23 Gew.-%.

Das so erhaltene faserverstärkte Polyphenylensulfon zeichnet sich gegenüber dem Produkt gemäß Beispiel 3 aufgrund seiner höheren Si-O-Si-Netzwerkdichte durch eine bessere Verstärkungswirkung aus.

### Beispiel 5

### Herstellung eines keramischen Formkörpers

12,7 kg eines analog Beispiel 4 unter Verwendung von Diethylenglykoldiethylether als Lösungsmittel erhaltenen faserverstärkten Polyethylens wurden auf 200°C erhitzt, mit einer Dispersion aus 12 kg Aluminiumoxid und 15 l Diethylenglykoldiethylether versetzt und die flüchtigen Bestandteile abdestilliert.

Danach wurde die Masse granuliert und aus dem getrockneten Granulat durch Spritzgußverarbeitung eine Rundplatte hergestellt. Das Ausbrennen des Polyethylens bei 500°C lieferte die faserverstärkte keramische Rundplatte. Eine weitere Temperaturbehandlung bei 1200°C führte schließlich zur SiO₂-faserverstärkten Al₂O₃-Keramik. Aufgrund der hohen Festigkeit und der sehr guten Zähigkeit hat sie besondere Bedeutung als Konstruktionswerkstoff im Maschinen- und Apparatebau sowie als Substratmaterial für integrierte Schaltungen.

### Beispiel 6

### Herstellung von faserverstärktem Polyphenylensulfon unter Einsatz eines Haftvermittlers

In eine in einem Extruder befindliche Mischung aus 14,5 kg faserverstärktem Polyphenylensulfon gemäß Beispiel 3 und 1,5 l N-Methylpyrrolidon wurden pro Stunde in eine auf 280°C temperierte Heizzone 66,3 g (0,3 mol) 3-Aminopropyltriethoxysilan als Haftvermittler gelöst in 50 ml N-Methylpyrrolidon zugegeben. Nach der Zugabe von 2 l Wasser, 8 ml wäßriger Salzsäure (32 %) in 30 ml N-Methylpyrrolidon sowie 20 ml wäßrigem Ammoniak (25 %) gelöst in 100 ml N-Methylpyrrolidon wurden die flüchtigen Bestandteile destillativ entfernt.

Nach dem Trocknen des Granulates wurde ein faserverstärktes Polyphenylensulfon mit einem SiO₂-Gehalt von 25 Gew.-% und einer verbesserten Haftung zwischen Faser und Matrix erhalten.

## Patentansprüche

1. Oligosiloxane der allgemeinen Formel I 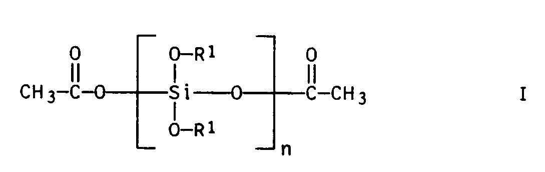 in der R¹ eine C₁-C₄-Alkylgruppe bedeutet und n für einen Wert von 2 bis 10 steht.

2. Verfahren zur Herstellung der Oligosiloxane I gemäß Anspruch 1, dadurch gekennzeichnet, daß man einen oligomeren Kieselsäureester der allgemeinen Formel II 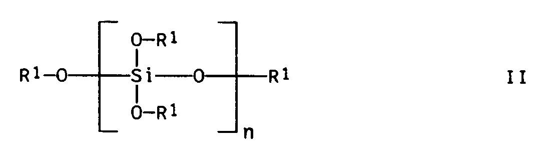 mit Essigsäureanhydrid umsetzt.

3. Thermoplastische Massen, enthaltend die Oligosiloxane I gemäß Anspruch 1.

4. Polysiloxane III, erhältlich durch thermische Polykondensation der Oligosiloxane I gemäß Anspruch 1.

5. Verfahren zur Herstellung der Polysiloxane III gemäß Anspruch 4, dadurch gekennzeichnet, daß man die thermische Polykondensation durch Radikalbildner katalysiert.

6. Verfahren nach Anspruch 5, dadurch gekennzeichnet, daß man als Radikalbildner Zinndibutyldiacetat verwendet.

7. Thermoplastische Massen, enthaltend die Polysiloxane III gemäß Anspruch 4.

8. Thermoplastische Massen, enthaltend die Polysiloxane III gemäß Anspruch 4, erhältlich durch Erhitzen einer Mischung des Thermoplasten und der Oligosiloxane I gemäß Anspruch 1.

9. Verbundwerkstoffe aus thermoplastischen Massen und Siliciumdioxid-Verstärkungsfasern, erhältlich durch saure Hydrolyse und basische Weiterkondensation von in einer organischen Lösung der thermoplastischen Masse dispergierten Polysiloxanen III sowie anschließende Entfernung der flüchtigen Bestandteile.

10. Verbundwerkstoffe nach Anspruch 9, enthaltend als weitere Komponente einen Haftvermittler.

11. Verbundwerkstoffe nach den Ansprüchen 9 oder 10, enthaltend zusätzlich feinteiliges keramisches Material.

12. Formkörper aus keramischem Material, welches mit Siliciumdioxidfasern verstärkt ist, erhältlich durch Ausbrennen der thermoplastischen Masse aus Formkörpern, die aus den Massen gemäß Anspruch 11 hergestellt wurden.

## Claims

1. An oligosiloxane of the formula I 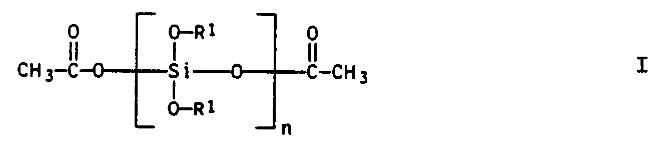 where R¹ is C₁-C₄-alkyl and n is from 2 to 10.

2. A process for preparing the oligosiloxane I of claim 1, comprising reacting an oligomeric silicate ester of the formula II 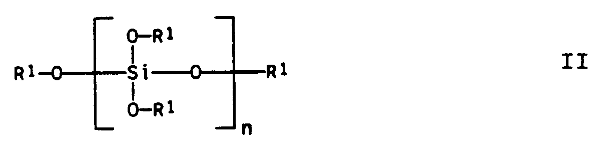 with acetic anhydride.

3. A thermoplastic composition containing the oligosiloxane I of claim 1.

4. A polysiloxane III obtainable by thermal polycondensation of the oligosiloxane I of claim 1.

5. A process for preparing the polysiloxane III of claim 4, comprising catalyzing the thermal polycondensation with a free radical former.

6. The process of claim 5, wherein the free radical former used is dibutyltin diacetate.

7. A thermoplastic composition containing the polysiloxane III of claim 4.

8. A thermoplastic composition containing the polysiloxane III of claim 4, obtainable by heating a mixture of the thermoplastic and the oligosiloxane I of claim 1.

9. A composite material formed from a thermoplastic composition and silicon dioxide reinforcing fibers, obtainable by acid hydrolysis and basic further condensation of polysiloxane III dispersed in an organic solution of the thermoplastic composition and subsequent removal of the volatiles.

10. The composite material of claim 9, containing an adhesion promoter as further component.

11. The composite material of claim 9 or 10, also containing a finely divided ceramic material.

12. A shaped article in a ceramic material reinforced with silicon dioxide fibers, obtainable by burning out the thermoplastic material in a shaped article produced from the material of claim 11.

## Revendications

1. Oligosiloxanes de formule générale I 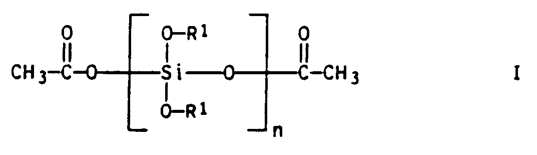 dans laquelle R¹ représente un groupement alkyle en C₁-C₄ et n a une valeur comprise entre 2 et 10.

2. Procédé de préparation des oligosiloxanes I selon la revendication 1, caractérisé en ce qu'on fait réagir un ester oligomère d'acide silicique de formule générale II 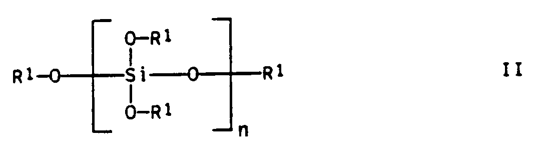 avec de l'anhydride acétique.

3. Masses thermoplastiques, contenant les oligosiloxanes I selon la revendication 1.

4. Polysiloxanes III, pouvant être obtenus par polycondensation thermique des oligosiloxanes I selon la revendication 1.

5. Procédé de préparation des polysiloxanes III selon la revendication 4, caractérisé en ce qu'on catalyse la polycondensation thermique par des substances formant des radicaux.

6. Procédé selon la revendication 5, caractérisé en ce qu'on utilise, comme substance formant des radicaux, le diacétate de dibutylétain.

7. Masses thermoplastiques, contenant les polysiloxanes III selon la revendication 4.

8. Masses thermoplastiques, contenant les polysiloxanes III selon la revendication 4, pouvant être obtenues par chauffage d'un mélange de la matière thermoplastique et des oligosiloxanes I selon la revendication 1.

9. Matériaux composites formés à partir de masses thermoplastiques et de fibres de renforcement en dioxyde de silicium, pouvant être obtenus par hydrolyse acide et recondensation basique de polysiloxanes III dispersés dans une solution organique de la masse thermoplastique, ainsi que par élimination ultérieure des constituants volatils.

10. Matériaux composites selon la revendication 9, contenant un agent d'adhérence comme autre composant.

11. Matériaux composites selon la revendication 9 ou 10, contenant en plus une matière céramique finement divisée.

12. Corps moulé en matière céramique qui est renforcé de fibres de dioxyde de silicium, pouvant être obtenu en éliminant par cuisson la masse thermoplastique contenue dans des corps moulés qui ont été fabriqués à partir des masses selon la revendication 11.
